Europäisches Patentamt

European Patent Office

Office européen des brevets

(11) Publication number: **0 594 083 A1**

## EUROPEAN PATENT APPLICATION

(21) Application number: **93116731.6**

(22) Date of filing: **15.10.93**

(51) Int. Cl.5: **B32B 27/32**, B29C 39/20, B29C 47/06

(30) Priority: **16.10.92 US 962269**

(43) Date of publication of application:
**27.04.94 Bulletin 94/17**

(84) Designated Contracting States:
**BE DE ES FR GB IT NL**

(71) Applicant: **HERCULES INCORPORATED**
**Hercules Plaza**
**Wilmington Delaware 19894-0001(US)**

(72) Inventor: **Gillette, Paul Calvin**
**30 Morning Glen Lane**
**Newark, Delaware 19711(US)**
Inventor: **Landoll, Leo Michael**
**1 Ice Pond Trail,**
**Hockessin Hunt**
**Hockessin, Delaware 19707(US)**

(74) Representative: **Keller, Günter, Dr et al**
**Lederer, Keller & Riederer**
**Patentanwälte**
**Prinzregentenstrasse 16**
**D-80538 München (DE)**

(54) Improved overwrap film.

(57) A transparent, non-shrinking, overwrap film especially suited for tobacco products provides superior moisture impermeable and leak resistant sealing, as well as low shrinkage during storage, and a high transparency and gloss to enhance product appearance. These overwrap films are made from a casting having a core and at least one sealing layer, each of which comprises a polyolefin, a hydrogenated hydrocarbon resin, and wax, wherein the core layer is comprised of at least 5% more resin than each sealing layer. Preferred polyolefins are polypropylenes that are at least 95% heptane insoluble. Also described is a process for producing these films.

This invention relates to packaging films with improved sealing and handling characteristics, and to the compositions and processes used for making such films. In one particular utility, the invention relates to transparent moisture impermeable overwrap films suitable for packaging tobacco products.

It is well-known in industries concerned with perishable items that the freshness of the packaged product can be effected by changes in its moisture content. The tobacco industry has been concerned with such aspects of quality control after discovering that the freshness in taste of a cigarette is related to its moisture content. One step in controlling the moisture content of the packaged cigarette is to wrap each package in a protective plastic seal to prevent the tobacco from dehydrating.

An ideal manufacturing technique would be to provide moisture impermeable packaging to assure no changes in freshness. In general, tobacco products require long-term retention of moisture. Accordingly, the focus in the industry has been concerned with improving the tightness of the seals and the barrier characteristics of the plastic sealable film. The industry has also been concerned with the manufacturing aspect of providing films which are easily sealed. A more recent shift has been to coextruded plastic films, that is, films having more than one layer wherein each layer can provide different packaging benefits. As such, one emphasis has been to modify the various film layers to achieve optimal sealing and barrier characteristics.

In addition to the importance of barrier characteristics, the sealable film is suitable for use in existing packaging equipment, is transparent, and can be printed upon.

These sealable films are unlike the various packaging films which are useful for their ability to shrink; shrink packaging is commonly used, for example, in food packaging. However, shrink sealable films used, for example, for packaging tobacco products would crush the paper cigarette package if they were to shrink upon sealing, and thus are packaging films unrelated those of the present invention.

Commercially available packaging films include those such as described in U.S. Patent No. 3,666,836 which consist of a major portion of polypropylene and a minor portion of copolymers of styrene (optionally alkyl substituted) with terpene hydrocarbons.

U.S. Patent No. 5,091,237 discloses a packaging film having a shrinkability of at least 20% at 90° C measured in the transverse direction and comprising a base layer and a top layer, each composed of a major portion of a propylene polymer and a minor portion of a hydrogenated hydrocarbon resin.

U.S. Patent No. 4,921,749 discloses a barrier film comprising a base layer composed of polypropylene and hydrogenated polycyclopentadiene resin and a one component coating layer on a surface of the base layer which comprises an ethylene-propylene copolymer.

Published Japanese patent application JP 61-203140 describes a packaging film comprising 100 parts of polypropylene and 25 parts of polydicyclopentadiene.

*Chemical Abstracts* (107:177551j) summarizes Japanese patent application JP 62-144946 as disclosing a three-layer film comprising an intermediate layer comprised of 70-90 parts of polypropylene and 30-10 parts of a petroleum or terpene resin free from polar groups, and a covering layer disposed on each side of the intermediate layer and comprised of 90-99.5 parts of polypropylene and 10-0.5 parts of a petroleum or terpene resin. The terpene or petroleum resin content of the core is at least 1.3 times that of the covering layers. The films are described as useful for press-through packaging for pharmaceuticals, exhibiting worse haze and lower moisture permeability than a comparable laminated film without any terpene or petroleum resin in the covering layers, not oriented or heat set, and significantly thicker than overwrap films for tobacco products.

In U.S. Patent No. 4,032,493, it is taught that the printability of a film made from a blend of stereoregular polypropylene and a hydrogenated hydrocarbon polymer is improved by adding to the blend a small amount of a hydrocarbon wax. Polyolefin films are used for a variety of packaging and labeling purposes. The present invention is concerned with multilayer films particularly useful as dimensionally stable transparent moisture barrier packaging films for tobacco products. These multilayer films generally comprises a core layer having a sealing layer integral with one side of the core layer film, or sandwiched between two sealing layers, and are made by stretching a casting into a film. The compositions of the core and sealing layer(s) generally comprise the same components, a blend of a polyolefin, a hydrogenated hydrocarbon resin, and a hydrocarbon wax, such as disclosed in the aforementioned U.S. Patent No. 4,032,493.

There is a need for a packaging film having improved moisture barrier properties, a high level of stiffness, superior gloss, a low coefficient of friction, and high transparency (low haze). According to the invention, a packaging film comprising a casting having (A) a core layer comprising (i) a polyolefin, (ii) 7 to 40 wt.% of a hydrogenated hydrocarbon resin, and (iii) 0.05 to 3 wt.% hydrocarbon wax, and (B) at least one sealing layer disposed adjacent the core layer and comprising (i) a polyolefin, (ii) 2 to 35 wt.% of a hydrogenated hydrocarbon resin, and (iii) 0.05 to 3 wt.% hydrocarbon wax, wherein the core layer (A) has at least 5% by weight more resin than the sealing layer (B).

Also according to the invention, a process for preparing such packaging films comprises the steps of: (I) providing a core layer composition, as previously described hereinabove, and a sealing layer composition, as previously described hereinabove; (II) coextruding the core and sealing layer compositions to produce a casting having adjacent core and sealing layers, optionally with an additional sealing layer to form a casting having the structure seal/core/seal; and (III) heating while stretching the casting in both longitudinal and transverse directions to produce an oriented film.

The polyolefin is preferably a polymer of a mono-alphaolefin containing from two to eight carbon atoms, especially two to four carbon atoms, and most preferably is derived from propylene units. Thus, for example, the polyolefin may be a homopolymer of one of the monomers ethylene, propylene, butene-1, 4-methyl-1-pentene, and hexene, or the polyolefin may be a copolymer of two or more of these olefinic monomers. A particularly suitable material for the polyolefin is polypropylene, especially a high molecular weight stereoregular (isotactic) predominantly crystalline polypropylene. The expressions "polypropylene" and "propylene polymer" as used herein denote not only isotactic propylene homopolymer, but also a copolymer of propylene or a blend of "polypropylene" with another polyolefin. The polypropylene copolymers may comprise minor amounts of other olefinic units, and thus preferably comprises at least 90%, more preferably at least 93%, and most preferably at least 96% propylene units. Likewise, blends of polypropylene with other polyolefins preferably include at least 90%, more preferably at least 93%, and most preferably 96% propylene homopolymer. Such polymer blends are typically sold in the trade as "polypropylene" inasmuch as the composition behaves essentially as does polypropylene. The polyolefin in the sealing layer(s) preferably comprises the same or a greater amount of propylene content than the polyolefin in the core layer.

The degree of isotacticity of the propylene polymer is determined conventionally by the amount of polymer which remains undissolved in n-heptane. The propylene polymer preferably is characterized by at least 95% isotacticity, that is, at least 95 wt.% heptane insoluble, and more preferably at least 96.5% insoluble.

Another component, the hydrogenated hydrocarbon resin, is typically referred to as "hard" resin. These resins are characterized as amorphous polymerized hydrocarbon materials which are hard, brittle solids at room temperature, soften over a range of temperatures upon heating, have a drop softening point above about 70° C., an average molecular weight (Rast) of at least about 500, an iodine value of less than about 50, and are compatible with the polypropylene. Exemplary hydrogenated hydrocarbon resins include homopolymers and copolymers derived from cyclopentadiene, pentadiene, methyl styrene, styrene, vinyl toluene, indine, and similar monomers, which have been hydrogenated. Exemplary commercial resins are a hydrogenated cyclopentadiene resin such as ESCOREZ® 5320 available from EXXON Chemicals Co., Linden, NJ, and a hydrogenated α-methyl styrene/vinyl toluene random copolymer (AMSVT) such as REGALREZ® 1126 resin available from Hercules Incorporated, Wilmington, DE.

As will be described later, a two- or three-layer casting is formed from those compositions into a film structure which comprises a core layer with one or two sealing or skin layers. We have discovered that the properties of the film can be improved by limiting the relative amount of hard resin in the core layer to more than the relative amount of hard resin in the sealing layer, preferably at least 5% more, more preferably at least 7% more, and most preferably at least 10% more hard resin than present in the sealing layer. Accordingly, each sealing layer comprises at least 5 wt.% less hard resin than the core layer composition. For example, if the core layer comprises 80 wt.% propylene polymer and 20 wt.% hard resin, then the composition for any sealing layer is chosen to comprise no more than 15% hard resin, the remainder being polypropylene. Accordingly, the "relative amount" mentioned above requires first determining the hard resin content or percentage of each layer separately, and then comparing the relative amount or percentage of resin in each layer. On such separate bases, the core layer generally comprises 7-40 wt.%, preferably 10-30 wt.%, and more preferably 15-25 wt.% hard resin, and each sealing layer generally comprises 2-35 wt.%, preferably 5-25 wt.%, and more preferably 10-20 wt.% hard resin.

In addition to the differential amount of hard resin, both the core and sealing layers include a hydrocarbon wax (simply "wax" as used hereinafter), such as paraffin wax, microcrystalline wax, or a Fischer-Tropsch process synthetic wax. The wax is added to the sealing layer to enhance the ability of the film to be heat-sealed to itself; the presence of the wax also beneficially decreases the coefficient of friction of the film. The wax is added to the core and sealing layers in amounts generally up to 3%, preferably from 0.5 to 1.5 wt.%, and most preferably about 1.0 wt.% A suitable commercial paraffin wax is that designated Paraflint H-1 (available from Moore and Munger, Shelton, CT), is present in the compositions described in the Examples below in an amount of 1.2 wt.%.

3

Other ingredients which can be added to the film formulation include antistatic agents and lubricants such as disclosed in U.S. Patent No. 5,091,237. The blend compositions of the sealing and core layers typically contain heat and light stabilizers, as is customary in the polyolefin arts. Any of the heat and light stabilizers normally employed for this purpose can be used herein. Such adjuvants include: antacids such as calcium stearate; antioxidants and heat stabilizers such as alkylated phenols, alkylidene bis(alkylphenol), terpene phenols, polyhydroxychromans, and alkyl esters of thiodialkanoic acids; and light stabilizers such as benzophenone derivatives and alkyl and aralkyl esters of salicylic acid. It is preferable to use adjuvant materials with a low tendency to bloom (i.e., to diffuse to the surface of the film layer into which they are incorporated). Increased concentration of these materials at the surface of the film can muffle the transparent appearance of the film, interfere with the adhesion at the interface joining core and skin layers, and degrade the surface characteristics of the film necessary or desirable for machining and other processing. Nevertheless, in some circumstances controlled blooming of adjuvant material in low concentrations can be desirable to enhance certain properties, such as the coefficient of friction (slip) of the film, to the extent other properties are not significantly degraded. The amount of excess adjuvant material added to the composition to achieve controlled blooming is typically determined empirically.

In a typical process for manufacturing films, raw material polymer is extruded or cast into a casting. The casting is then heated and stretched, such as on a tenter frame or bubble extrusion apparatus, and then quenched to form a film. Thereafter, the film is heated and stretched below its glass transition temperature in both longitudinal and transverse directions (and then quenched) to orient the polymer chains, which significantly improves the physical properties. Heating such a film will induce the film to shrink back to the prestretched configuration, the rate and amount of shrinkage being proportional to the temperature and duration of heating. However, the process for manufacturing may further comprise an optional step of maintaining the oriented film at a temperature less than the melting point of the polymer composition for an amount of time effective to reduce stresses induced during orientation and form a relaxed film. Restraining the film at an elevated temperature for a brief period of time will relax the stress induced during orientation, and thereby stabilize the film against shrinkage at elevated temperatures. In the present process, it is preferred to use a bubble extrusion process (in which pressure is used to stretch the cast tube into a film bubble). In addition to relaxation, an optional step is to subject the film to a corona field, which can improve printing and sealing properties. A further optional step is analogous to the relaxation step just described, but is conducted at a temperature elevated from ambient temperature for a period of time effective to improve the packaging properties (e.g., creep, coefficient of friction) of the film. This annealing reduces stresses which cause low temperature shrinkage (i.e., creep). Commercial equipment for casting, bubble blowing, and corona treatment, annealing, and the like, are well known and available commercially.

The following Procedures and Examples are intended to illustrate the preferred embodiments of the invention, and are not intended to limit the invention to aspects of the particular materials and processing conditions described.

PROCEDURE A

Polymer Blend Preparation

A polymer blend may be obtained commercially for use in a particular extrusion machine, and the artisan operating such a machine will be generally knowledgeable in the raw material characteristics required for a particular machine. An appropriate amount of the desired polypropylene in "reactor flake" form, i.e., having not been repelletized after initial polymerization, is admixed with the desired amount of finely ground hard resin, wax, and other typical adjuvants as desired, and the blended powders are melt mixed in a conventional mixer (e.g., Banbury brand) fitted with pelletization equipment to form 2-5 mm plastic pellets. The composition is altered as desired to provide raw material pellets having compositions particular to the core and sealing layers. Thus, in practicing the present invention, the composition would be chosen generally to provide pellets for the core composition having a higher amount of hard resin than those to be made for the sealing layer.

PROCEDURE B

Extrusion and Orienting

The pellets for both the sealing and core layers are coextruded through an annular die to form a tubular casting having a core portion between two sealing portions; the casting is then fully quenched. The quenched casting is heated to below the melting point of the core composition, nipped (secured) at both ends, and inflated with pressurized air to expand the tube to a final orientation, typically 7x7 MD/TD (machine direction/transverse direction). The blown bubble is cooled and the edges slit after the bottom nip. Stretching the film while heating acts to "orient" the polymer chains in the film, the higher temperature allowing some flow of the polymer chains while not melting the polymer crystals. Orienting generally improves the physical properties of the film.

Films are typically formed at about 300 gauge maximum total thickness (100 gauge = 1 mil, and 1 mil = 0.001 inch), more preferably 50-100 gauge. Each sealing layer is typically less than 20 gauge, and is preferably 1-5 gauge in thickness.

PROCEDURE C

Heat Setting

During orientation of the cost tube by such operations as pressurized expansion and tenter frame stretching, stresses are induced in the film, and these stresses can detrimentally effect the film qualities over time. To relieve those stresses, the oriented film is wound over and allowed to relax on hot rolls (typically maintained it 110° to 140° C, the temperature being varied to achieve the amount of heat relaxing desired). Because of the speed at which the continuous casting is processed to orient the film, the longitudinal speeds of 100 to 1000 ft/min allow heat setting to be performed in less than about two seconds. Alternatively, the film can be allowed to relax under tension in hot air ovens to achieve the desired heat relaxing.

PROCEDURE D

Corona Treatment

The relaxed film is then wound over a metal roll which serves as one electrode in a corona field. Film is normally corona treated in a high energy field, typically 3 watt-min/ft$^2$, and at an elevated temperature generally in the range of 60° to 110° C. Corona treatment is typically used to improve the ability to print on the film with ink, for example, a tax stamp applied to cigarette packages by a state in which they are to be sold. Treating the film in this manner also improves the ability of the film to be sealed to itself.

PROCEDURE E

Heat Soaking (Annealing)

After corona treatment, the relaxed film is optionally annealed at only slightly elevated temperatures for a time sufficient to reduce stresses that would induce low temperature creep (e.g., creep at ambient and temperatures generally encountered storage conditions), although packages destined for prompt use may remain dimensionally stable without this annealing step. Generally, the film is heated to about 50° C. for about one day; in the following samples the film was held at 51° C. for 26 hours. We have also found that annealing decreases the coefficient of friction of films made from the preferred compositions. The coefficient of friction (COF) of the final film, as effected by the amount of wax and the heat soaking, is less than about 0.5, preferably less than 0.45, and most preferably 0.25 to 0.35 as measured by ASTM D1894.

The heat soaked film is then cooled and wound for final slitting and testing.

PROCEDURE F

Overwrap Testing

Overwrap performance was evaluated by wrapping commercial 85 mm cigarette packs on a commercial cigarette overwrapping machine available from Scandia, Inc., Clifton, NJ. The seal initiation temperature (SIT) was determined as the temperature at which the folded seal could not be easily picked apart with a pointed object. Wrapped packs were heat-aged 24 hours at 120° F to simulate warehouse storage, and thereafter visually inspected for wrinkles and pack damage due to shrinkage.

EXAMPLES

Using Procedures A to F, a variety of simple films were prepared and tasted. Shrinkage of the film was measured by maintaining the films for 10 minutes in an oven heated to 120° C and then measuring the linear percent shrinkage after cooling.

In general, all films shown in the Table included a polypropylene homopolymer having about 95% heptane insolubles and a melt flow index of about 4, and a hard resin (either hydrogenated cyclopentadiene or a hydrogenated α-methyl styrene/vinyl toluene random copolymer (AMSVT)). All films except Samples 3, 8, and 9 contained a standard level of 1.2% of a paraffin wax (Paraflint H-1 brand as mentioned above) in both the core and sealing layers to provide sufficient lubrication for evaluating these films in a manufacturing environment; Samples 3 and 8 contained wax in the core but not in the sealing layer, and Sample 9 did not contain wax in either the core or the sealing layer. Further, all films except Samples 2 and 8 contained 0.1% Kaophile 2 clay and 0.2% Kaopolite SFO clay (kaoline clays available from Georgia Kaolin Company, Elizabeth, NJ), which were added for anti-blocking purposes (to facilitate winding and unwinding of the film).

Samples 4 and 5 were comprised of the same composition but processed using different orientation temperatures. Sample 6 differs from Sample 7 in part in that the latter was processed without the heat soaking step.

For Samples 2 and 8, the sealing layer comprised a 6% ethylene/94% propylene copolymer as the polyolefin component and further included either 0.3% silica (anti-blocking agent) (available as Syloid 244FP from W.R. Grace & Co., Baltimore, MD) or 0.3% polydimethylsiloxane (anti-slip agent) (available as DOW 200 Fluid, from Dow-Corning, Midland, MI).

The Table below shows the results of evaluating the sealing initiation temperature, detects from heat aging, MVTR (as $g \cdot mil/100 \ in^2 \cdot day$, as determined by ASTM Method F1249-90; 100° F. and 90% relative humidity), and the percent haze (as determined by ATSM Method D1003).

# EP 0 594 083 A1

| Sample | | 1 | 2 | 3 | 4 | 5 | 6 | 7 | 8 | 9 |
|---|---|---|---|---|---|---|---|---|---|---|
| Core Layer (A) | % PP[1] | 94 | 94 | 94 | 94 | 96 | 96 | 96 | 94 | 96 |
| | % Resin | 20 | 20 | 14 | 22 | 22 | 20 | 20 | 0 | 20 |
| | Resin Type[2] | C5 | C5 | AMSVT | C5 | C5 | C5 | C5 | — | C5 |
| Sealing Layer (B) | % PP | 94 | [3] | 94 | 94 | 94 | 94 | 94 | [3] | C5 |
| | % Resin | 20 | 0 | 13 | 11 | 11 | 12 | 12 | 0 | 11 |
| | Resin Type | C5 | — | AMSVT | AMSVT | AMSVT | AMSVT | AMSVT | — | AMSVT |
| Percent Shrinkage at 120° F | MD | 10 | 10 | 10 | 10 | 13 | 9 | 15 | 7 | 9 |
| | TD | 10 | 10 | 10 | 10 | 15 | 9 | 25 | 5 | 9 |
| Orientation Temperature ° F | | 130 | 130 | 135 | 130 | 120 | 130 | 130 | 145 | 130 |
| SIT °F | | 305 | 315 | 305 | 300 | 285 | 285 | 285 | 315 | 305 |
| Heat Aged Package Appearance | | Good | Good | Good | Good | Bad[4] | Good | Poor[5] | Good | Good |
| MVTR g·mil/100²·d | | 0.17 | 0.17 | 0.26 | 0.16 | 0.16 | 0.17 | 0.18 | 0.34 | 0.17 |
| % Haze | | 0.6 | 3.0 | 0.8 | 0.6 | 0.6 | 0.6 | 0.7 | 3.0 | 0.6 |

Notes:
(1) PP = polypropylene;
(2) C5 = hydrogenated cyclopentadiene;
AMSVT = hydrogenated α-methyl styrene/vinyl toluene;
(3) Random copolymer of 6% ethylene and 94% propylene;
(4) Overwrap shrinkage caused wrinkling;
(5) Overwrap shrinkage crushed package.

An analysis of the Table shows that films having proportionally more hard resin in the core layer than in the sealing layer generally exhibit a reduced sealing initiation temperature (SIT). A reduced SIT is beneficial because it allows for faster processing (less time is required to heat the film to the sealing temperature), and thereby typically induces fewer distortions upon sealing (e.g., rippling from melting of the film during sealing). The films of this invention can be sealed at temperatures as low as about 180° F. It is also preferable to provide films exhibiting a relatively sharp transition between unitary and sealed film at a temperature above ambient (to prevent sealing during storage) but sufficiently low to provide for improved processing.

A comparison of Samples 4 and 5, which have the same core and sealing layer compositions but were oriented at different temperatures, shows that lower orientation temperature improves the SIT value. However, the higher shrinkage concomitant with a lower orientation temperature causes distortion of the packages upon heat aging, and so provides a film unacceptable for longer term storage. Likewise, Sample 7 shows that elimination of the heat soaking procedure provides a film exhibiting unacceptably high shrinkage for long term storage.

7

Note the high haze and especially high seal initiation temperatures of the copolymer sealant used in Sample 2 and 8. In contrast, the present films exhibit haze at ≤ 0.6%, and a lower haze (greater transparency) is usually desirable.

Examples 3 and 8, compared to other examples with higher loadings of hard resin in the core layer (A), have higher moisture vapor transmission rates and are therefore poorer barrier films than the preferred embodiments of this invention.

The foregoing descriptions and examples are meant to illustrate and explicate the invention. Upon perusing this specification, the artisan may contrive various modifications, and such changes are intended to be within the scope and spirit of the invention as defined by the claims.

## Claims

1. A film made from a casting comprising: (A) a core layer comprising (i) a polyolefin, (ii) 7 to 40 wt.% of a hydrogenated hydrocarbon resin, and (iii) 0.05 to 3wt.% hydrocarbon wax; and (B) at least one sealing layer disposed adjacent the core layer and comprising (i) a polyolefin, (ii) 2 to 35 wt.% of a hydrogenated hydrocarbon resin, and (iii) 0.05 to 3 wt.% hydrocarbon wax, wherein the core layer (A) has at least 5% by weight more of said resin than the scaling layer (B).

2. The film defined by claim 1, wherein the core layer comprises at least 10 wt.% of the hydrogenated hydrocarbon resin.

3. The film defined by any of the preceding claims, wherein the core layer comprises not more than 30 wt.% of the hydrogenated hydrocarbon resin.

4. The film defined by any of the preceding claims, wherein the sealing layer comprises at least 5 wt.% of the hydrogenated hydrocarbon resin.

5. The film defined by any of the preceding claims, wherein the sealing layer comprises not more than 25 wt.% of the hydrogenated hydrocarbon resin.

6. The film defined by any of the preceding claims, wherein the core and sealing layers each comprise at least 0.5 wt.% of the hydrocarbon wax.

7. The film defined by any of the preceding claims, wherein the core and sealing layers each comprise not more than 1.5 wt.% of the hydrocarbon wax.

8. The film defined by any of the preceding claims, wherein the film is oriented.

9. The film defined by any of the preceding claims, wherein the core layer comprises at least 15 wt.% of the hydrogenated hydrocarbon resin.

10. The film defined by any of the preceding claims, wherein the hydrogenated hydrocarbon resin is a hydrogenated $\alpha$-methyl styrene/vinyl toluene resin or a hydrogenated cyclopentadiene resin.

11. The film defined by any of the preceding claims, wherein the polyolefin is polypropylene.

12. The film defined by of any of the preceding claims, wherein the polypropylene is at least 95% heptane insoluble.

13. The film defined by any of the preceding claims, wherein the core layer (A) comprises at least 10 wt.% more of the hydrogenated hydrocarbon resin than the sealing layer (B).

14. The film defined by any of the preceding claims, wherein the hydrogenated hydrocarbon resin in the core layer is a hydrogenatad cyclopentadiene and the hydrogenated hydrocarbon resin in the sealing layer is a hydrogenated $\alpha$-methyl styrene/vinyl toluene.

15. The film defined by any of the preceding claims, comprising a sealing layer (B) disposed on each side of the core layer (A).

8

**16.** A process for preparing a packaging film of any of the preceding claims, which comprises the steps of providing (A) a core layer composition comprising (i) a polyolefin, (ii) 7 to 40 wt.% of a hydrogenated hydrocarbon resin, and (iii) 0.05 to 3 wt.% of a hydrocarbon wax, and (B) a sealing layer composition comprising (i) a polyolefin, (ii) 2 to 35 wt.% of a hydrogenated hydrocarbon resin, and 0.05 to 3 wt.% of a hydrocarbon wax, wherein the core layer (A) has at least 5% by weight more resin than the sealing layer; (B) coextruding said core composition (A) and said sealing layer composition (B) to produce a casting having (A) and (B) as adjacent layers; and heating while stretching said casting to produce an oriented film.

**17.** The process defined by claim 16, further comprising the step of maintaining the oriented film at a temperature less than the melting point of the core layer composition for an amount of time effective to reduce stresses induced during orientation and to provide a relaxed film.

**18.** The process defined by claim 16 or 17, further comprising the step of corona treating the oriented film at an elevated temperature.

**19.** The process defined by claims 16, 17 or 18, further comprising the step of annealing the relaxed film at a temperature elevated from ambient temperature for a period of time effective to reduce low temperature stresses in the film.

## DOCUMENTS CONSIDERED TO BE RELEVANT

EP 93116731.6

| Category | Citation of document with indication, where appropriate, of relevant passages | Relevant to claim | CLASSIFICATION OF THE APPLICATION (Int. Cl.5) |
|---|---|---|---|
| Y | EP - A - 0 479 101 (HOECHST AKTIENGESELLSCHAFT) * Claims; page 2, lines 39-46; page 3, lines 16-52; example 4 * | 1-5,8-18 | B 32 B 27/32 B 29 C 39/20 B 29 C 47/06 |
| D,Y | US - A - 4 032 493 (PASCUAL) * Claims; example 1 * | 1-11, 14,16-19 | |
| D,A | US - A - 5 091 237 (SCHLOEGEL et al.) * Claims; column 3, lines 6-10 * | 1-5, 8-12, 14-17 | |
| | | | TECHNICAL FIELDS SEARCHED (Int. Cl.5) |
| | | | B 32 B B 29 C C 08 J |

The present search report has been drawn up for all claims

| Place of search | Date of completion of the search | Examiner |
|---|---|---|
| VIENNA | 30-12-1993 | WEIGERSTORFER |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)